**Europäisches Patentamt**

**European Patent Office**

**Office européen des brevets**

(11) Veröffentlichungsnummer: **0 235 735**

**A1**

(12) **EUROPÄISCHE PATENTANMELDUNG**

(21) Anmeldenummer: **87102660.5**

(22) Anmeldetag: **25.02.87**

(51) Int. Cl.⁴: **H02K 23/66 , H02K 11/00**

(30) Priorität: **04.03.86 DE 3606926**

(43) Veröffentlichungstag der Anmeldung:
**09.09.87 Patentblatt 87/37**

(84) Benannte Vertragsstaaten:
**AT BE CH DE ES FR GB GR IT LI LU NL SE**

(71) Anmelder: **Kress-elektrik GmbH + Co.
Elektromotorenfabrik
Hechinger Strasse
D-7457 Bisingen(DE)**

(72) Erfinder: **Der Erfinder hat auf seine Nennung
verzichtet**

(74) Vertreter: **Otte, Peter, Dipl.-Ing.
Tiroler Strasse 15
D-7250 Leonberg(DE)**

(54) **Elektrohandwerkzeug.**

(57) Bei einem Elektrohandwerkzeug mit Gehäuse, antreibendem Elektromotor mit Stator und Rotor sowie gegebenenfalls mit Handgriff und in diesem angeordneten Schaltungselementen wird vorgeschlagen, sämtliche den elektrischen Schaltungsbereich betreffenden Elemente, Leitungen, Komponenten jeweils zu einzelnen Funktionsgruppen zusammenzufassen und diese als untereinander steckbare Blockbausteine (1,3,7,9,11) auszubilden, wobei sämtliche elektrischen Verbindungsleitungen unter Verzicht auf solche Leitungen aufweisende Printplatten o.dgl. als metallische Flachbänder (21',21'',21''') von außen in Führungsnuten (32) der Blockbausteine, die Kunststoffteilgehäuse darstellen, eingelegt sind. Ein zentraler Hauptblockbaustein (7) von U-Form nimmt das zugewandte Lager (31) des Rotors auf, fixiert mechanisch über Stifte (12) den Stator bei gleichzeitiger Kontaktierung entsprechender Feldspulen-Flachsteckhülsen (15) und stellt mit weiteren, nach unten im Bereich des Handgriffs ragenden Flachstecker (14a,20) die erforderlichen elektrischen Kontaktverbindungen zu restlichen Funktionsgruppen bildenden Blockbausteinen wie LINKS-RECHTS-Schalter (9), EIN-AUS-Schalter (1) mit Drehzahldrückern und Entstörglied (3) her. Gegenseitige Verrastungsmittel mit den Gehäuseschalen sichern die Position des Brückenkontaktteils

als Hauptblockbaustein.

Fig.1

## Elektrohandwerkzeug

Stand der Technik

Die Erfindung geht aus von einem Elektrohandwerkzeug nach der Gattung des Hauptanspruchs. Elektrohandwerkzeuge dieser Art sind in vielfältiger Form bekannt (DE-PS 33 11 557, DE-OS 34 13 233).

Der aus der DE-PS 33 11 557 bekannte Elektromotor für ein Handwerkzeug umfaßt an einem Ende des Stators ein brückenähnliches Halteteil, welches auch als Motorbrücke bezeichnet werden kann. Diese Motorbrücke ist zur Positionierung und Lagerung des auf diese Weise gehaltenen Wälzlagers für die Ankerwelle bestimmt und läßt sich beispielsweise dadurch in geeigneter Weise mit dem Stator verbinden, daß endseitig und in Richtung auf den Stator verlaufend an der Motorbrücke Stifte angeordnet sind, die ein Aufstecken der Motorbrücke auf den Stator zur Erzielung einer genauen Ausrichtung ermöglichen. Hierdurch ergibt sich gleichzeitig auch durch die Aufnahmeöffnung in der Motorbrücke für das zugeordnete Ankerwellen-Wälzlager die den Luftspalt bestimmende Endlage. Das eigentliche Ziel dieser bekannten Anker lagerung eines Elektromotors besteht allerdings darin, den Anker zusammen mit dem auf der Ankerwelle fest angeordneten Wälzlager vor der Montage auswuchten zu können, also das Auswuchten des Ankers mit allen wesentlichen, das Ankerwellen-Wälzlager einschließenden Teilen durchzuführen, und dann den äußeren Wälzlagerring in die Aufnahmeöffnung der Motorbrücke einzusetzen. Ferner umfaßt der bekannte Elektromotor die Möglichkeit, ein Lagerschildelement, an welchem auch die Kohlebürsten befestigt sein können, in Querrichtung zur Motorbrücke in diese einzuschieben und festzuschrauben. Hinweise über die Anordnung elektrischer Kontaktverbindungen sind nicht getroffen.

Bei der einen Elektromotor aufweisenden Handwerkzeugmaschine entsprechend DE-OS 34 13 233 wird eine erste Lagerhalbschale für das dem Handgriff des Elektromotors benachbarten Rotorwellenende mit einer Gehäusehalbschale verbunden und anschließend eine vom Gehäuse getrennte Lagerbrücke, die gleichzeitig auch Träger für elektrotechnische Bauelemente ist, zur gleichzeitigen Anordnung der anderen Lagerhalbschale mit der ersten Lagerhalbschale (Lagerbock) so verbunden, daß die andere Gehäuseschale von Lageraufgaben völlig entlastet ist. Hierdurch ergibt sich auch bei noch nicht geschlossenem Gehäuse die Halterung von Kohlebürstenhaltern, Drosseln zur Funkentstörung sowie ergänzend noch vorgesehene Leuchtdioden und ferner die Möglichkeit, Überprüfungen am Gerät bei geöffnetem Gehäuse durchzuführen. Hinweise auf die Möglichkeit, von dieser Lagerbrücke mechanische und/oder elektrische Verbindungen zum Stator zu treffen, enthält diese Veröffentlichung nicht.

Vorgeschlagen ist ferner in der nicht vorveröffentlichten deutschen Patentanmeldung P 35 02 442.9, bei einem Elektro motor an einem Ende des Stators eine Motorbrücke anzuordnen, die vorzugsweise in ihrer Ausbildung als Printplatte elektrische Teilkomponenten, auch Kohleführungen lagert und durch Fixierstifte sowohl mechanisch mit dem Stator verbunden als auch gleichzeitig durch entsprechende Kontaktzungen eine elektrische Kontaktverbindung mit Statorwicklungsenden eingeht. Diese Motorbrücke enthält ferner eine Aufnahmeöffnung für . das zugeordnete Ankerwellen-Wälzlager, so daß sich durch die mechanische Vorfixierung am Stator auch eine Ausrichtung des Rotors zu diesem und die Luftspaltpositionierung ergibt.

Der vorliegenden Erfindung liegt die Aufgabe zugrunde, das eingangs genannte Elektrohandwerkzeug dadurch entscheidend zu verbessern, daß sämtliche Teile des Handwerkzeugs ohne Montageaufwand in einfacher, unverwechselbarer Weise zusammengefügt und sowohl in ihrer mechanischen als auch elektrischen Zuordnung durch die gleichen, ineinandergreifenden Elemente gesichert sind, wodurch mindestens halbautomatische Montageschritte ermöglicht werden und der Gesamtaufbau des Elektrohandwerkzeugs von bestechender Einfachheit und daher auch kostengünstig wird.

Vorteile der Erfindung

Das erfindungsgemäße Elektrohandwerkzeug löst diese Aufgabe mit den kennzeichnenden Merkmalen des Hauptanspruchs und hat den Vorteil, daß sämtliche Teile, Elemente und Komponenten, aus denen ein Elektrohandwerkzeug, beispielsweise eine Bohrmaschine üblicherweise besteht, mit anderen Teilen, Komponenten und Elementen zu einigen wenigen Blockbausteinen zusammengefaßt werden, wobei diese Blockbausteine dann je nach Erfordernis aneinandergefügt werden, indem metallische Steckkontakte sowohl eine mechanische Relativfixierung zueinander als auch die Herstellung der elektrischen Verbindungen ermöglicht.

Hierbei ist ein Hauptlagerteil vorgesehen, welches als Brükkenkontaktteil im folgenden bezeichnet wird und mechanisch und elektrisch sowohl zum Stator als auch zu ihm selbst wieder vorgeschalteten Blockbausteinen Steckverbindungen herstellt und gleichzeitig über eigene Fixiermittel von Gehäuseteilen des vorzugsweise in Halbschalenbauweise hergestellten Gehäuses aufgenommen wird.

Aufwand und die Kompliziertheit der Montage eines üblichen Elektrohandwerkzeugs reduzieren sich durch die Erfindung drastisch, wobei insbesondere im Bereich der Hauptkomponente, nämlich des Brückenkontaktteils eine Vielzahl von Arbeitsgängen vollautomatisch durchgeführt werden können.

Im Gegensatz zu dem bisherigen Vorgehen, die jeweiligen einzelnen elektrischen Komponenten wie beispielsweise den EIN-AUS-Schalter, den Drehrichtungsumschalter, Entstörglieder und die Stromzuführung zum Motor an den Kohlehaltern bzw. zu den Statorfeldspulen mittels Litzen vorzunehmen, die dann wiederum entweder Ader-End- oder -Steckhülsen zum wahlweisen Schrauben oder Aufstecken aufweisen, ist in vorteilhafter Weise bei vorliegender Erfindung jeweils eine für sich gesehen eine unabhängige und abgeschlossene Einheit (Blockbaustein) bildende Funktionsgruppe geschaffen, wobei jede Funktionsgruppe als Blockbaustein dann mittels Steckverbindungen direkt mit einer benachbarten Funktionsgruppe oder auch übergreifend mit weiteren Funktionsgruppen verbunden werden kann.

Dabei sind die folgenden Funktionsgruppen jeweils zu Stan dardeinheiten (Blockbausteinen) zusammengefaßt:
EIN-AUS-Schalter
Entstörglied
Brückenkontaktteil
Stator
Rotor
LINKS-RECHTS-Schalter.

Bis auf die elektrische Zuleitung, die als Netzanschluß nach herrschenden Vorschriften in Form von Schraubklemmen ausgeführt ist, sind, jedenfalls im handgriffnahen Bereich des Elektrohandwerkzeugs sämtliche Komponenten und Elemente in dieser Weise in ihre Einheiten integriert, wobei ein besonderer Vorteil auch darin besteht, daß auch die bisher nur mit erheblichen Schwierigkeiten wegen der komplizierten Anschlußbildung und Verlegung zu realisierende Links-Rechts-Umschaltung problemlos als Zwischensteckteil ausgebildet, und -falls gewünscht -, durch einfaches Aufstecken vorzugsweise im Bereich des Brückenkontaktteils dem Gesamtsystem zugeordnet werden kann.

Sämtliche Blockbausteine (Funktionseinheiten) sind in Form von Standardbaugruppen ausgebildet, können daher auch bei einer Störung im Reparaturfall ohne Montageaufwand ausgetauscht werden, wobei lediglich ein Abziehen von den bisherigen Steckverbindungen und das Zusammenfügen mit dem neuen Bauteil erforderlich ist, da sämtliche elektrischen Komponenten steckbar ausgeführt sind.

Ein weiterer Vorteil besteht darin, daß nicht benötigte Baugruppen beispielsweise als Blindelemente ausgebildet sein können, so daß zwar ein Blockbaustein vorhanden ist, dieser jedoch lediglich im Bereich seiner Steckverbindungen ohne eigentliche elektrische Bauelemente durchgebrückt ist.

Durch die in den Unteransprüchen aufgeführten Maßnahmen sind vorteilhafte Weiterbildungen und Verbesserungen des im Hauptanspruch angegebenen Elektrohandwerkzeugs möglich. Besonders vorteilhaft ist die elektrische Leitungs-und Anschlußbildung im Bereich des Hauptkomponententeils, also des Brückenkontaktteils, welches gleichzeitig neben der mechanischen Rotorlagerung an diesem Ende die mechanischen Verbindungen zum Stator herstellt und sämtliche elektrischen Verbindungsanschlüsse von den sonstigen Bauelementen und Funktionsgruppen zum Stator/Rotor sicherstellt, im letzteren Fall über die von ihm gleichzeitig aufgenommenen Kohlehalterungen. Die elektrischen Leitungsverbindungen bestehen aus Kontaktflachbändern, die in entsprechende, bei der Herstellung des Brückenkontaktteils beispielsweise nach dem Spritzgußverfahren freigelassene Nuten oder Ausnehmungen eingefügt werden, wobei in bestimmten Abständen auch Verkrallungen an den Kontaktbändern vorgesehen sein können, so daß diese in ihren Aufnahmenuten nach dem Einschieben unverrückbar gehalten sind. Insbesondere dieser letztere Montageschritt läßt sich leicht automatisieren, wenn man in dem Brückenkontaktteil noch entsprechende Öffnungen freiläßt, damit Greifer des Handhabungsautomaten die Kontaktbänder einführen und Eindrückstifte die endgültige Fixierung vornehmen können.

Zeichnung

Ein Ausführungsbeispiel der Erfindung ist in der Zeichnung dargestellt und wird in der nachfolgenden Beschreibung näher erläutert. Es zeigen:

Fig. 1 in einer perspektivisch-explodierten Darstellung die Blockbausteine bildenden Funktionsgruppen eines Elekrohandwerkzeugs, soweit diese auch eine elektrische Bedeutung haben,

Fig. 2 die Funktionsgruppen der Fig. 1 in zusammengebautem Zustand in Draufsicht, eingebettet in eine lediglich teilweise dargestellte Gehäuselagerhalbschale,

Fig. 3 schematisiert, jedoch hinsichtlich der Funktionsgruppen unterteilt das die jeweiligen elektrischen Komponenten darstellende elektrische Schaltbild und

Fig. 4 als Teilausschnitt perspektivisch die Möglichkeit der Positionierung der Kontaktflachbänder an den aus Kunststoff bestehenden Block-oder Teilgehäuseteilen der einzelnen Blockbausteine, insbesondere am Brükkenkontaktteil.

Beschreibung der Ausführungsbeispiele

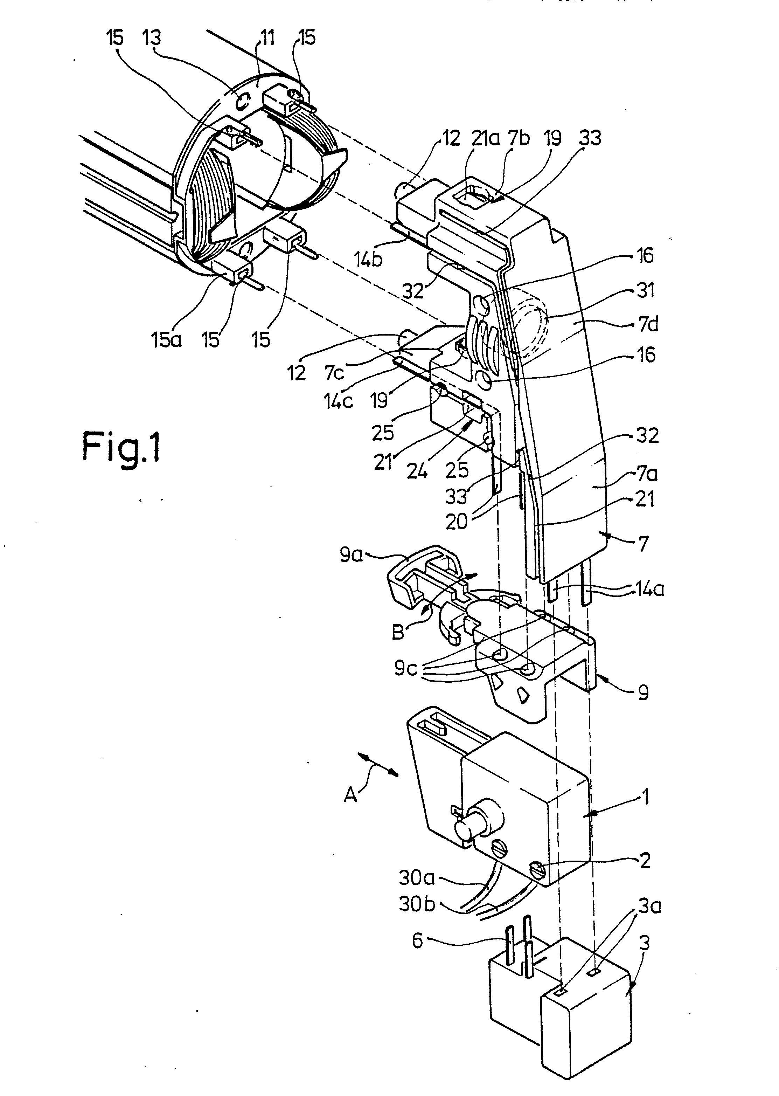

Der Grundgedanke vorliegender Erfindung besteht darin, das elektrische Kontaktierungs-, Schalt- und Übertragungssystem eines Elektrohandwerkzeugs, welches sämtliche elektrischen Komponenten umfaßt, und welches bei einer Bohrmaschine üblicherweise im Bereich des Handgriffs integriert ist, in sinnvoller Weise in einzelne Blockbausteine zu unterteilen, die jeweils elektrische Funktionsgruppen darstellen und dann diese Teileinheiten untereinander steckbar auszuführen, wie dies am besten der Darstellung der Fig. 1 entnommen werden kann. Dabei umfaßt das dargestellte Ausführungsbeispiel auch die Möglichkeit einer in ihrer Drehrichtung umschaltbaren Maschine, wodurch der durch die vorliegende Erfindung aufgezeigte Lösungsweg besonders klar verdeutlicht, auf welche im Grunde einfache Weise es der Erfindung gelingt, bisher nur durch umständliche Verschaltungen und Verdrahtungen realisierbare Schaltmaßnahmen zu lösen.

Es versteht sich, daß jeweils nicht benötigte Bausteine, beispielsweise Drehrichtungsumschalter, Entstörglied u.dgl. entweder einfach weggelassen oder durch geeignete Blindglieder ersetzt werden können.

Bei dem in Fig. 1 dargestellten Ausführungsbeispiel ist der EIN-AUS-Schalter, der vorzugsweise noch eine die Drehzahl des Elektromotors regelnde Elektronik beinhaltet, wobei die Drehzahlveränderung durch Variieren des Drückerwegs entsprechend dem Doppelpfeil A geschieht, mit 1 bezeichnet. Zur Herstellung des erforderlichen Netzanschlusses ist die Zuleitung 30 mit ihren beiden Litzen 30a, 30b als einzige und den bestehenden Vorschriften genügend mittels Schraubklemmen 2 am EIN-AUS-Schalter 1 befestigt.

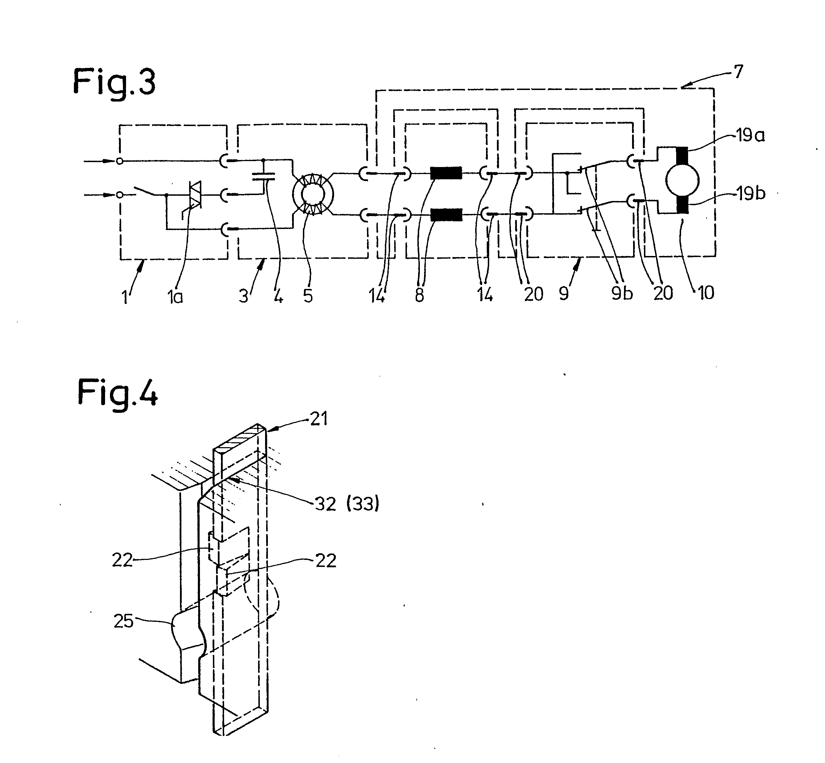

Es ist ferner ein Entstörglied 3 vorgesehen, welches sämtlich zur Entstörung notwendigen Bauteile enthält, wie beispielsweise Kondensatoren 4, Ringkerndrosseln 5 u.dgl., wie dies am besten der Darstellung der Fig. 3 entnommen werden kann, in welcher die jeweiligen Funktionsgruppen durch eine gestrichelte Umrandung nochmals kenntlich gemacht worden sind. Man erkennt auch in Fig. 3 daß die Drehzahlverstellmöglichkeit symbolisch durch das Symbol eines Triacs 1a angedeutet ist.

Die Kontaktierung des Entstörglieds 3 zu dem Blockbaustein des EIN-AUS-Schalters 1 erfolgt über Steckstifte, bevorzugt über Flachstecker 6, die in entsprechende, üblicherweise eine Federkontaktierung aufweisende Aufnahmeöffnungen unten am EIN-AUS-Schalter 1 eingeführt und hierdurch auch mechanisch sicher vorfixiert werden. Es versteht sich, daß, und dies gilt für alle Funktionsgruppen und Blockbausteine, die entsprechenden Kontaktierungen auch umgekehrt erfolgen können, daß also vom EIN-AUS-Schalter 1 vorspringende Flachstecker ausgehen, die in Aufnahmeöffnungen am Entstörglied eingreifen.

Das Entstörglied 3 weist ferner noch zwei Aufnahmeöffnungen 3a auf, die der Aufnahme von weiteren Flachsteckern anderer Blockbausteine dienen, so daß auch bestimmte Blockbausteine übergreifende elektrische Verbindungen möglich sind, in dieses spezielle Ausführungsbeispiel also von Flachsteckern 14a an einer nach unten in Längsrichtung des Handgriffs gezogene Verlängerung 7a des Hauptblockbausteins, nämlich des Brückenkontaktteils 7.

In der Reihenfolge nach oben schließt sich an den Blockbaustein des EIN-AUS-Schalters 1 noch der LINKS-RECHTS-Umschalter 9 an, der die Aufgabe hat, bei wechselstromgespeisten Elektromotoren der in Fig. 3 gezeigten Bauart die Kohlebürstenanschlüsse, die in Reihe mit den Feldwicklungen des Stators liegen, umzuschalten.

Bei dem dargestellten Ausführungsbeispiel erfolgen die elektrischen Leitungsverbindungen so, wie in Fig. 3 dargestellt, d.h. die Anschlüsse vom EIN-AUS-Schalter 1 werden zunächst über das Entstörglied 3 geführt und sind dann mit den jeweils einen Anschlüssen der Statorfeldspulen 8 verbunden, deren andere Anschlüsse über die durch den LINKS-RECHTS-Schalter 9 mögliche Kreuzumschaltung über die Kohlebürsten 19a zum Kollektor des Rotors und von diesem zu den Rotorwicklungen gelangen, wodurch sich der Kreis - schließt. Es versteht sich aber, daß die Erfindung nicht auf eine solche Ausbildung eines Elektromotors mit entsprechender elektrischer Verschaltung der zugeordneten Komponenten beschränkt ist, sondern innerhalb des erfindungsgemäßen Rahmens beliebigen Variationen zugänglich ist, was insbesondere die Art und Aufbau der Leitungsführung und der Zuordnung der einzelnen Funktionsgruppen untereinander betrifft. Im folgenden wird die Erfindung allerdings anhand der entsprechend dem Schaltbild der Fig. 3 verlaufenden elektrischen Verbindungswege erläutert, zur Klarstellung und zum besseren Verständnis.

Demnach umfaßt der LINKS-RECHTS-Schalter 9 ein durch äußere Betätigung entsprechend dem Doppelpfeil B verschwenkbare Handhabe 9a, wodurch der Doppelumschalter 9b je nach erzielter Schaltstellung so betätigt werden kann, daß entweder der eine Kohlebürstenanschluß mit dem einen Ende der Statorfeldwicklung oder je nach gewünschter Drehrichtung mit dem Anschlußende der anderen Statorfeldspule verbunden werden kann. Insgesamt verfügt daher der LINKS-RECHTS-Schalter 9 über vier Steckkontaktanschlüsse 9c, die als Aufnahmeöffnungen für von dem Brückenkontaktteil 7 ausgehende Flachsteckerzungen 20 ausgebildet sind.

Der Brückenkontaktteil beinhaltet als Hauptelement sämtliche elektrischen Verbindungen einerseits zum Motor und andererseits zum LINKS-RECHTS-Schalter 9, falls vorhanden, ferner auch zum Entstörglied 3, falls vorhanden. Ein wesentliches Merkmal vorliegender Erfindung besteht darin, daß der vorzugsweise aus Kunststoff bestehende, einstückige Brückenkontaktteil nicht nach Art einer Printplatte o.dgl. ausgeführt ist, sondern von einem im wesentlichen massiven Trägerteil gebildet ist, welches gabelförmig oben mit zwei Vorsprüngen 7b, 7c auf den Stator gerichtet ist, ein mittleres Hauptlagerteil 7d umfaßt, welches auch das diesseitige Rotorwälzlager 31 aufnimmt bzw. bildet und schließlich, wie weiter unten schon erwähnt, in einen bei diesem Ausführungsbeispiel nach unten heruntergezogenen Teilbereich 7a übergeht, der der Führung und Halterung von elektrischen Kontaktbändern zum Entstörglied 3 dient und gleichzeitig, jedenfalls in diesem Fall, den EIN-AUS-Schalter und den LINKS-RECHTS-Schalter umgeht.

Das vorzugsweise nach einem üblichen Spritzgießverfahren hergestellte Kunststoffteil des Brückenkontaktteils 7 enthält eine Vielzahl von außen zugängliche, gleich bei seiner Herstellung berücksichtigte Längsnuten von im Grunde beliebiger Form und beliebigem Verlauf, in welche zur Herstellung der elektrischen Verbindungen Kontaktflächenbänder 21, die daher Stromschienen bilden, eingelegt oder eingefügt sind. Diese Stromschienen stellen Kontakte her mit dem Entstörglied 3, den Statorfeldspulen 8, dem LINKS-RECHTS-Schalter 9 und mit Kohlehaltern 19. Die Endbereiche der Stromschienen überstehen jeweils ihre zugeordneten Einlegenuten und bilden dann gleichzeitig die Steckerzungen oder Flachstecker zur Kontaktierung angrenzender Aufnahmeöffnungen. Mit anderen Worten bedeutet dies, daß die die elektrischen Verbindungen herstellenden Stromschienen

-bis auf die betreffende Verbindung zwischen dem EIN-AUS-Schalter 1 und dem Entstörglied 3 -im wesentlichen im Brückenkontaktteil eingesetzt sind und daher die angrenzenden Bauteile an jeweils für die von diesen ausgehenden Flachstecker 14, 14a entsprechend ausgerichtete und ausgebildete Aufnahmeöffnungen aufweisen. Diese Aufnahmeöffnungen folgen vorzugsweise der äußeren Gestalt der Flachstecker und verfügen ebenfalls vorzugsweise über federnde Kontaktstücke, die beim Einschieben der Flachstecker zurückweichen und diese elektrischen Kontakte sicher und verbindungsfest aufnehmen.

So ist bei dem in Fig. 1 dargestellten Brückenkontaktteil 7 eine erste Nut 32 erkennbar, die vom unteren Vorsprung 7a den mittleren Hauptteil 7b durchsetzend bis zum Austritt eines Flachsteckers 14b führt, der in eine zugeordnete Flachsteckhülse 15 in der Statorendscheibe 11 eingreift. Die Flachsteckhülsen 15 können dabei von vorspringenden Materialteilen oder Ansätzen 15a des Statormaterials gebildet sein und sind weiterführend mit den entsprechenden Feldspulenanschlüssen verbunden.

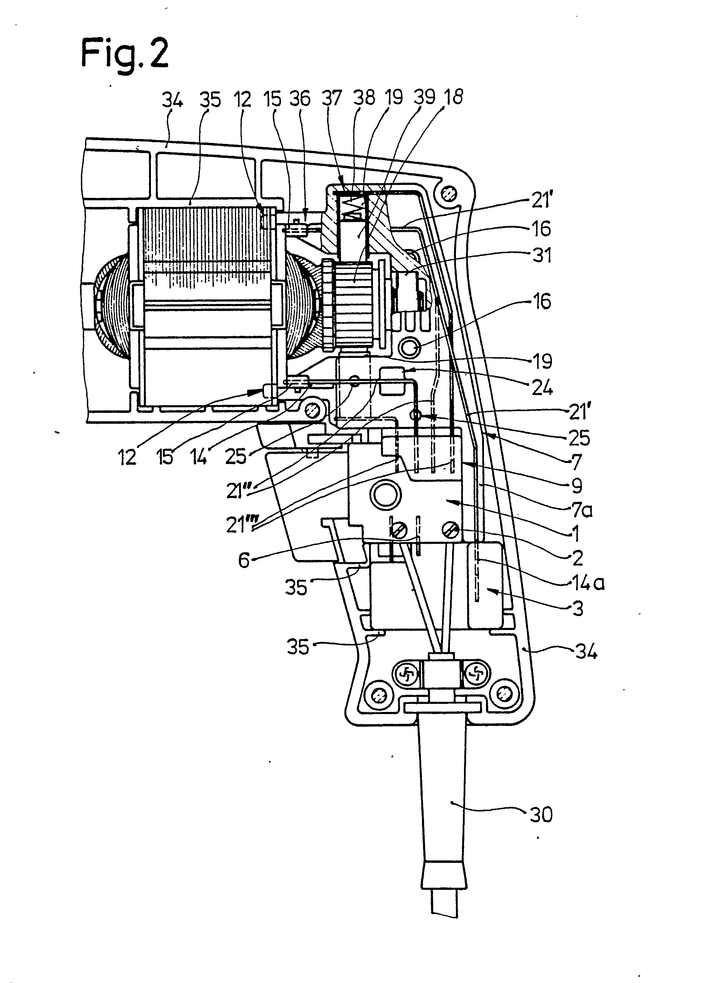

Auf der in Fig. 1 zugewandten Seite des Brückenkontaktteils 7 erkennt man ferner eine weitere Aufnahmenut 33 für eine Stromschiene, die, die Aufnahmenut 32 überkreuzend, in den oberen Teilschenkel 7b geführt ist, wo sie angrenzend zum oberen Ende der dortigen Kohlehalterung 19 endet; man erkennt in Fig. 1 auch die in diese Nut 33 eingelegte Stromschiene 21a. Ein solches Überkreuzen, und daher ist auf diese spezielle Lagerung genauer eingegangen, ist unter Umständen erforderlich, kann aber problemlos durchgeführt werden, wenn man die Nuten mit unterschiedlicher Tiefe setzt und die von ihnen aufgenommenen Stromschienen entsprechend tief, jeweils bis zum Nutgrund, eindrückt. Auf die zusammengebaute Version sowie die bei dem vorliegenden Ausführungsbeispiel speziell getroffene Stromschienenverteilung und -kontaktierung wird weiter unten noch anhand der Darstellung der Fig. 2 eingegangen.

Der grundsätzliche Aufbau des Brückenkontaktteils 7 vervollständigt sich durch in Richtung auf die Statorendscheibe 11 vorspringende Fixiermittel, von denen in der Darstellung der Fig. 1 zwei Fixierzapfen 12 dargestellt sind, die an verjüngten Vorsprüngen des oberen bzw. unteren Gabelschenkels 7b, 7c sitzen und bei dem axialen Aufschieben des Brückenkontaktteils auf den Stator in entsprechende Gegenaufnahmebohrungen 13 in der Statorendscheibe 11 ein greifen und so eine präzise Fixierung dieser beiden Teile zueinander und damit gleichzeitig auch des Rotorwellenlagers 31 auf dieser Seite sicherstellen, wobei dann gleichzeitig auch die entsprechenden elektrischen Anschlüsse durch die in die Flachsteckhülsen 15 eingreifenden Flachstecker 14, 14b mit dem Stator realisiert werden.

Damit die in die Ausnehmungen oder Nuten des Brückenkontaktteils (Kontaktbrücke) eingebetteten Stromschienen 21 aus Flachband in den Nuten sicher sitzen, sind Verkrallungen vorgesehen, die sich genauer der Darstellung der Fig. 4 entnehmen lassen und die aus aneinander angrenzenden, nach beiden Seiten aus der Ebene des Flachbandes oder der Stromschiene in Querrichtung herausgedrückte Schienenteile bestehen. Wird eine mit solchen Krallen 22 ausgebildete Stromschiene 21 in ihre zugeordnete Aufnahmenut 32, 33 (bis zum Nutgrund) eingedrückt, dann fixiert sie sich in ihrer Aufnehmernut selbst, da die Krallen 22 durch ihre - scharfen Grate oder Randkanten und einem teilweisen Eingraben in die angrenzenden Nutwände jedes Herausziehen oder Lockerwerden verhindern.

Damit die Stromschienen oder Kontaktflächenbänder 21 mittels Handhabungs-und Montageautomaten in ihre Nuten am Brückenkontakteil eingesetzt werden können, sind in diesen noch entsprechende Ausnehmungen vorgesehen, nämlich einmal Taschen 24 für den Greifer eines Handhabungsautomaten sowie beispielsweise ringförmige Ausnehmungen 25, die den Durchtritt von Eindrückstiften ermöglichen, um so die Stromschienen bis zum Nutgrund einzupressen. Durch den notwendigerweise abgeknickten Verlauf der Stromschienen und der sie aufnehmenden Nuten im Brückenkontakteil ergibt sich ohnehin eine die Stromschienen in Längsrichtung sichernde Fixierung gegen eine Verschiebung, während das Herausziehen in Querrichtung durch die Krallen 22 verhindert wird.

Ferner weist das Brückenkontaktteil 7 zur Fixierung in den vorzugsweise in Halbschalenbauweise ausgeführten Gehäuse 34 (siehe Fig. 2) beidseitig über beispielsweise zwei oder mehr angeordnete konische Einsenkungen 16 auf, in welche am Gehäuse vorgesehene, ebenfalls konische Gegenzapfen eingreifen.

Durch die Ausbildung des Brückenkontaktteils als kompakte, zentrale Einheit, an der alle übrigen Funktionsgruppen dann steckbar angeordnet sind, durch die Möglichkeit, das Brükkenkontaktteil einerseits mechanisch und elektrisch mit dem Stator zu verbinden, und gleichzeitig mechanisch im Gehäuse zu fixieren, ergibt sich eine präzise Zuordnung und Lagerung der einzelnen Teile zueinander, eine wesentlich vereinfachte Montage und eine kostengünstige Fertigung des gesamten Geräts.

Aus der Darstellung der Fig. 2, die den die elektrischen Teile, Komponenten, Verschaltungen und Einrichtungen tragenden Bereich eines Elektrohandwerkzeugs, bei einer Bohrmaschine also den Griffbereich zeigt, erkennt man die platzsparende und systemorientierte, funktionsgerechte Anordnung und Zuordnung der einzelnen Blockbausteine. Der flache LINKS-RECHTS-Schalter 9 ist zwischen dem EIN-AUS-Schalter und dem nach unten gerichteten, flachen Bereich des Brückenkontaktteils eingesetzt; nach unten an den EIN-AUS-Schalter 1 schließt sich das Entstörglied 3 an, welches über die hintere und untere Verlängerung 7a des Bückenkontaktteils kontaktiert und auch fixiert ist, welches gleichzeitig auch EIN-AUS-Schalter und den LINKS-RECHTS-Schalter von hinten hintergreift und ebenfalls zur Lagefixierung beiträgt, welche im wesentlichen durch die wenn sichtbar durchgezogenen, wenn nicht sichtbar gestrichelt ausgebildeten Stromschienen und deren Verlauf sowie durch entsprechend vorspringende Gehäuserippen 35, die die Blockbausteine aufnehmen und durch Anschlag sichern, bewirkt wird.

Speziell aus der Darstellung der Fig. 2 erkennt man noch, daß vom Entstörglied 3, welches vom EIN-AUS-Schalter 1 beaufschlagt ist (siehe auch Fig. 3), beidseitig Stromflachschienen 21' in ihren zugeordneten Nuten nach oben laufen zur Herstellung von Kontaktverbindungen bei 36 mit den Flachsteckhülsen 15 an der Statorendscheibe. Von den Statoranschlüssen gehen dann als 21″ wieder Flachstromschienen zurück zum LINKS-RECHTS-Schalter 9, während vom LINKS-RECHTS-Schalter 9 ausgehende und mit 21‴ gekennzeichnete Stromflachschienen jeweils beidseitig und wie am besten bei 37 erkennbar, stromführende Vorspannungsfedern 38 der Schleifkohle 39 kontaktieren, die in entsprechenden, auf den Kollektor 18 des Rotors gerichteten Führungskanälen (Kohlehalterungen 19) des Brückenkontaktteils sitzen. Man erkennt, daß sich auf diese Weise auch im Bereich der Ausbildung der Kohlehalterungen drastische Vereinfachungen realisieren lassen, sowohl was die Führung und Lagerung der Kohlen mit ihren Vorspannungsfedern betrifft, als auch deren elektrische Kontaktierung durch die jeweiligen Stromschienenenden 21a, die aus ihren Nuten heraus die Kohlehalterungen 19 und deren jeweilige obere und untere Zugangsöffnungen abdecken, aber auch die Möglichkeit der bevorzugten Lagepositionierung der Kohlehalter so, daß diese wirksam von der angesaugten und diese Stelle durchströmenden Luft gekühlt werden.

Die Erfindung ist daher in der Lage, mit einem Schlag Schwierigkeiten zu beseitigen, die sich bisher gerade im Bereich der Kohlehalter und deren elektrischer Kontaktierung sowie der notwendigen und bisher auch stets immer aufwendigen Verdrahtung im Bereich des LINKS-RECHTS-Schalter 9 ergeben haben.

Alle in der Beschreibung, den nachfolgenden Ansprüchen und der Zeichnung dargestellten Merkmale können sowohl einzeln als auch. in beliebiger Kombination miteinander erfindungswesentlich sein.

## Ansprüche

1. Elektrohandwerkzeug mit Gehäuse, antreibendem Elektromotor mit Stator und Rotor sowie gegebenenfalls Handgriff mit in diesem angeordneten Schaltungselementen, dadurch gekennzeichnet, daß

a) sämtliche elektrische Funktionen und Aufgaben erfüllenden Einzelteile, Komponenten, Elemente u.dgl. zu jeweils austauschbare Blockbausteine bildenden Funktionsgruppen (EIN-AUS-Schalter 1, Entstörglied 3, LINKS-RECHTS-Schalter 9, Brückenkontaktteil 7, Stator u.dgl.) zusammengefaßt sind, daß

b) die einzelnen Blockbausteine jeweils über Steckverbindungen (6, 14a, 14b, 15, 20) mit benachbarten und/oder übergreifend mit weiteren Blockbausteinen verbunden sind, daß

c) durch die Steckverbindungen gleichzeitig sämtliche elektrischen Verbindungen zwischen den Blockbausteinen hergestellt sind, und daß

d) ein Hauptbaustein als Brückenkontaktteil - (7) ausgebildet ist, welches sowohl ein Rotor-Hauptlager (31) als auch die Bürstenhalterung (19) aufnimmt, beidseitig Steckkontaktanschlüsse einerseits zum Stator und andererseits zu weiteren Blockbausteinen (1,3,9) aufweist und ergänzend über mechanische Positionsfixiermittel unmittelbar zum Stator gesichert ist.

2. Elektrohandwerkzeug nach Anspruch 1, dadurch gekennzeichnet, daß die Steckverbindungen zwischen allen Blockbausteinen von in den Blockbausteinen geführten und verlaufenden metallischen Flachbändern (Stromschienen 21, 21', 21″, 21‴) gebildet sind, deren freie Enden in zugeordnete Aufnahmeöffnungen zu kontaktierender weiterer Blockbausteine eingreifen.

3. Elektrohandwerkzeug nach Anspruch 1 oder 2, dadurch gekennzeichnet, daß die Blockbausteine in Form von die ihnen zugeordneten elektrischen Elemente, Teile, Leitungen u. dgl. aufnehmenden bzw. haltenden Kunststoff-Teilgehäusen ausgebildet sind und an ihren im zusammenmontierten Zustand angrenzenden Flächen, wo erforderlich, jeweils elektrische Kontaktmittel (Flachsteckhülsen 3a, 9c, 15) und/oder Flachstecker (6, 14a, 14b) aufweisen, die auch mechanische Positionsfixiermittel sind.

4. Elektrohandwerkzeug nach Anspruch 1, 2 oder 3, dadurch gekennzeichnet, daß die Flachbänder der Stromschienen (21, 21', 21″, 21‴) in Aufnahmenuten (32, 33) der die Blockbausteine bildenden Gehäuseformen von außen eingeführt und gegen ein Lösen gesichert sind.

5. Elektrohandwerkzeug nach einem der Ansprüche 1 bis 4, dadurch gekennzeichnet, daß die die Stromschienen (21, 21', 21″, 21‴) bildenden metallischen Flachbänder durch körpereigene Krallen als Arretierungsmittel in den Nuten der Blockbausteine, in die sie eingelegt sind, gehalten sind.

6. Elektrohandwerkzeug nach Anspruch 5, dadurch gekennzeichnet, daß die Krallen (22) durch gegenläufige Teilausbrechungen der metallischen Flachbänder gebildet sind, die sich nach dem Einschieben in die Aufnahmenuten der Blockbausteine mit den angrenzenden Nutwänden verkrallen.

7. Elektrohandwerkzeug nach einem der Ansprüche 1 bis 6, dadurch gekennzeichnet, daß zur Montage der Stromschienen (21, 21', 21″, 21‴) in ihren Aufnahmenuten (32, 33) der Blockbausteine - (7) angrenzend zu den Aufnahmenuten Taschen - (24) für das Einfahren eines die Stromschienen haltenden Greifwerkzeugs vorgesehen sind sowie Ausnehmungen (25) für zusätzlich an den Stromschienen angreifende Eindrückstifte.

8. Elektrohandwerkzeug nach einem der Ansprüche 1 bis 7, dadurch gekennzeichnet, daß bei von einem Blockbaustein gelagerten, überkreuzenden Stromschienen (21, 21', 21″, 21‴) die zugeordneten jeweiligen Aufnahmenuten (32, 33) unterschiedliche Tiefe aufweisen zur sicheren Trennung der Stromschienen im Überkreuzungsbereich.

9. Elektrohandwerkzeug nach einem der Ansprüche 1 bis 8, dadurch gekennzeichnet, daß ein zentraler Hauptblockbaustein in Form eines Brückenkontakteils (7) vorgesehen ist, welches zur gleichzeitigen Kontaktierung und mechanischen Fixierung eine allgemeine U-Form aufweist mit zwei in Richtung auf den Stator eines Elektromotors weisenden oberen und unteren Schenkel (7b, 7c), einem die beiden Schenkel verbindenden Basiskörper (7d) sowie einer an diesem angesetzten Verlängerung (7a), die der Lagerung von solchen Stromschienen (21) dient, die, unmittelbar angrenzende Blockbausteine übergreifend, zur elektrischen Kontaktierung entfernter Blockbausteine (Entstörglied 3) bestimmt sind.

10. Elektrohandwerkzeug nach Anspruch 9, dadurch gekennzeichnet, daß das Brückenkontaktteil (7) im zentralen Basiskörper - (7d) die Aufnahme (31) für das zugewandte Rotor-Wälzlager bildet, an den Enden der U-Schenkel - (7b, 7c) in Fixiergegenbohrungen (13) des Stators bzw. der Statorendscheibe (11) eingreifende Fixierstifte (12) aufweist, angrenzend zu den Fixierstiften (12) beidseitig von vorspringenden Stromschienen gebildete Flachstecker (14b, 14c) aufweist, die in in die Statorendscheibe (11) integrierte Flachsteckhülsen (15) zur elektrischen Kontaktierung der Statorfeldspulen (8) eingreifen und selbst über Ausrichtmittel (beidseitige konische Einsenkungen 16) verfügt, die in zugeordnete, komplementäre Gehäuseausrichtmittel (konische Gegenzapfen) in dem vorzugsweise aus zwei Halbschalen gebildeten Gehäuse (34) eingreifen.

11. Elektrohandwerkzeug nach einem der Ansprüche 1 bis 10, dadurch gekennzeichnet, daß ein die zur Entstörung erforderlichen Bauteile - (Kondensator 4, Ringkerndrossel 5) enthaltender Entstörglied-Blockbaustein (3) vorgesehen und angrenzend zum Blockbaustein des EIN-AUS-Schalters (1) und in der Ebene des Elektrohandwerkzeug-Handgriffs gesehen unterhalb desselben angeordnet und über Flachstecker (6) mit diesem verbunden ist.

12. Elektrohandwerkzeug nach Anspruch 11, dadurch gekennzeichnet, daß dem Entstörglied-Blockbaustein (3) gegenüberliegend der LINKS-RECHTS-Schalter-Blockbaustein (9) angeordnet und mindestens über Flachstecker (20) und Flachsteckhülsen (9c) mit dem Hauptblockstein des Brükkenkontaktteils (7) verbunden ist, wobei der nach unten weisende Ansatz (7a) des Brückenkontaktteils (7) die Blockbausteine EIN-AUS-Schalter (1) und LINKS-RECHTS-Schalter (9) übergreifend mit Flachsteckern (14a) in Flachsteckhülsen (3a) des Entstörglieds (3) eingreift.

13. Elektrohandwerkzeug nach einem der Ansprüche 1 bis 12, dadurch gekennzeichnet, daß der Blockbaustein des LINKS-RECHTS-Schalters (9) eine allgemeine U-Form aufweist und mit seinen beiden Schenkeln den Blockbaustein des EIN-AUS-Schalters (1) mindestens teilweise übergreifend rittlings auf diesem sitzt, wobei die beiden Schenkel jeweils zwei Flachsteckhülsen (9c) zur Aufnahme von insgesamt vier vom Brückenkontaktteil (7) kommenden Flachsteckern (14a) aufweisen, wobei über zwei der die Flachstecker (14a) bildenden Stromschienen Anschlüsse von Statorfeldspulen - (8) zum LINKS-RECHTS-Schalter (9) geführt und über die beiden restlichen Anschlüsse nach der vom LINKS-RECHTS-Schalter (9) gebotenen Umschaltung und über im Brückenkontaktteil gelagerten und geführten Stromschienen (21'') die am Kollektor (18) schleifenden Kohlen (39) kontaktiert werden.

14. Elektrohandwerkzeug nach einem der Ansprüche 1 bis 13, dadurch gekennzeichnet, daß die beiden Schenkel (7b, 7c) des Brückenkontaktteils -

(7) auf den Kollektor (18) des Rotors ausgerichtete, Kohlehalterungen (19) bildende Bohrungen aufweisen, deren jeweils nach außen gerichtete Öffnungen von den Kontaktenden von in entsprechende Aufnahmenuten des Brückenkontaktteils - (7) eingelegten Stromschienen (21'') abgedeckt sind derart, daß die die Kohlen (39) auf den Kollektor pressenden Federn (38) an diesen Stromschienenenden zur Anlage gelangen und gleichzeitig die elektrische Kontaktverbindung hergestellt wird.

0 235 735

Fig.1

# Fig.2

# Fig.3

1    1a    3    4    5    14    8    14    20    9    9b    20    10

19a
19b
7

# Fig.4

21
32 (33)
22
22
25

0 235 735

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | DE-A-3 147 418 (BLACK & DECKER INC.) <br> * Seite 9, Zeile 19 - Seite 15, Zeile 11; Seite 7, Zeile 26 - Seite 8, Zeile 2; Figuren 1,2,3 * | 1-3 | H 02 K 23/66 <br> H 02 K 11/00 |
| A | | 9-14 | |
| | --- | | |
| A | DE-U-8 520 256 (BLACK & DECKER INC.) <br> * Seite 4, Zeile 9 - Seite 6, Zeile 18; Figuren 1-5 * | 1 | |
| | --- | | |
| A | EP-A-0 158 065 (BOSCH GMBH) <br> * Seite 3, Zeile 19 - Seite 5, Zeile 19, Figur 1 * | 1 | |
| | ----- | | RECHERCHIERTE SACHGEBIETE (Int. Cl.4) |
| | | | H 02 K 23/00 <br> H 02 K 11/00 <br> H 02 K 5/00 |

Der vorliegende Recherchenbericht wurde für alle Patentansprüche erstellt.

| Recherchenort | Abschlußdatum der Recherche | Prüfer |
|---|---|---|
| BERLIN | 28-04-1987 | WEIHS J.A. |